(19) Europäisches Patentamt
European Patent Office
Office européen des brevets

(11) **EP 4 375 187 B1**

(12) **EUROPEAN PATENT SPECIFICATION**

(45) Date of publication and mention
of the grant of the patent:
**31.12.2025 Bulletin 2026/01**

(21) Application number: **23210409.1**

(22) Date of filing: **16.11.2023**

(51) International Patent Classification (IPC):
**B64D 11/00** (2006.01)   **B64D 43/00** (2006.01)

(52) Cooperative Patent Classification (CPC):
**B64D 11/0015; B64D 43/00**

(54) **SYSTEM AND METHOD FOR CONTROL OF CABIN WITH INTERNET OF THINGS (IOT) CONCEPT**

SYSTEM UND VERFAHREN ZUR STEUERUNG EINER KABINE MIT INTERNET-DER-DINGE (IOT)-KONZEPT

SYSTÈME ET PROCÉDÉ DE COMMANDE DE CABINE AVEC UN CONCEPT DE L'INTERNET DES OBJETS (IDO)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.11.2022 IN 202211067639**
**21.06.2023 US 202318212583**

(43) Date of publication of application:
**29.05.2024 Bulletin 2024/22**

(73) Proprietor: **Rockwell Collins, Inc.**
**Cedar Rapids, IA 52498 (US)**

(72) Inventors:
• **RAJU, Gopal Rudra**
**Chennai (IN)**
• **NATARAJAN, Rathan**
**Coimbatore (IN)**
• **DHANUJA, H M**
**Mandya (IN)**
• **LAKSHMIKANTH, GR**
**Chittoor (IN)**

(74) Representative: **Dehns**
**10 Old Bailey**
**London EC4M 7NG (GB)**

(56) References cited:
EP-A1- 3 470 327    US-A1- 2016 004 374
US-A1- 2021 122 469    US-B1- 11 182 970

# EP 4 375 187 B1

**Description**

CROSS-REFERENCE TO RELATED APPLICATIONS

The present application claims the benefit of India Provisional Patent Application 202211067639, filed November 24, 2022, titled SYSTEM AND METHOD FOR CONTROL OF CABIN WITH INTERNET OF THINGS (IOT) CONCEPT, naming Gopal Rudra Raju, Rathan Natarajan, Dhanuja H M, and Lakshmikanth GR as inventors.

TECHNICAL FIELD

Embodiments of the inventive concepts disclosed herein are directed generally to aircraft cabin systems and, more particularly, to automatic control of cabin systems, such as cabin systems used in business jets or private jets.

BACKGROUND

Cabin management systems (CMSs) provide passengers with convenient access to cabin controls (e.g., cabin lighting and climate settings, window shade controls) while providing the cabin crew with set-up and maintenance functionality. CMS controls are often used in business and/or private jet cabin systems. CMS controls may include a graphical user interface (GUI) and are generally hierarchical and textual menu-based systems. Typically, users are required to manually switch to airshow or camera sources to acquire and watch information about Points of Interest (POI). Further, lights and shades are manually adjustable via the GUI or mechanically. It may generally be difficult to determine what lighting or shade level or graphic/view/camera a user may desire at any particular moment.
Therefore, it would be advantageous to provide a system that cures the shortcomings described above. US 11 182 970 B1 discloses an augmented reality window and a method thereof. EP 3 470 327 A1 discloses interactive dimmable window systems and methods thereof. US 2021/122469 A1 discloses systems and method for providing a wake-up user interface for a night mode on transportation vehicles. US 2016/004374 A1 discloses a user interface for an aircraft.

SUMMARY

A cabin management control device is provided as defined by claim 1. Additional features of the cabin management control device are provided in dependent claims 2-15.

BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.

FIG. 1A is an illustration of a graphical user interface (GUI), in accordance with example embodiments of this disclosure.

FIG. 1B is an illustration of the GUI of FIG. 1A, in accordance with example embodiments of this disclosure.

FIG. 1C is an illustration of the GUI of FIG. 1B, in accordance with example embodiments of this disclosure.

FIG. 1D is an illustration of the GUI of FIG. 1C, in accordance with example embodiments of this disclosure.

FIG. 2 is an illustration of the GUI of FIG. 1D, in accordance with example embodiments of this disclosure.

FIG. 3A is a schematic illustration of an aircraft cabin, in accordance with example embodiments of this disclosure.

FIG. 3B is a schematic illustration of the aircraft cabin of FIG. 3A with increased lighting, in accordance with example embodiments of this disclosure.

FIG. 3C is a schematic illustration of the aircraft cabin of FIG. 3B with increased lighting, in accordance with example embodiments of this disclosure.

FIG. 3D is a schematic illustration of the aircraft cabin of FIG. 3C with increased lighting, in accordance with example embodiments of this disclosure.

FIG. 4A is a schematic illustration of a window, in accordance with example embodiments of this disclosure.

FIG. 4B is a schematic illustration of the window of FIG. 4A with a shade, in accordance with example embodiments of this disclosure.

FIG. 4C is a schematic illustration of the window of FIG. 4B with the shade lowered, in accordance with example embodiments of this disclosure.

FIG. 4D is a schematic illustration of the window of FIG. 4C with the shade completely lowered, in accordance with example embodiments of this disclosure.

DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "in embodiments, "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to an automated control scheme for cabin features (e.g., lights, shades) and/or graphics shown to a user on a graphical user interface (GUI). Such automation may be based on, for example, flight data parameters already known to a cabin management control device-thereby allowing for a solution that doesn't additional sensors or data collection. Such embodiments may be lower cost than other solutions, such as solutions requiring additional light sensors.

In other cabin systems, cabin features and graphics may need to be manually adjusted by a user. For example, a cabin management control device with manual control of cabin lighting levels, window shade levels, and in-flight entertainment displayed on a GUI is disclosed in U.S. Patent Application No. 16/657,231, filed October 18, 2019, . For example, any aspect of U.S. Patent Application No. 16/657,231 may be utilized with an embodiment herein. For instance, the automated adjustment of lights, shades, and display of camera feed data of the present disclosure may also be simultaneously manually adjustable (e.g., capable of being overrode by manual user interaction with the GUI) in accordance with, but not limited to, manual user interactions described in U.S. Patent Application No. 16/657,231.

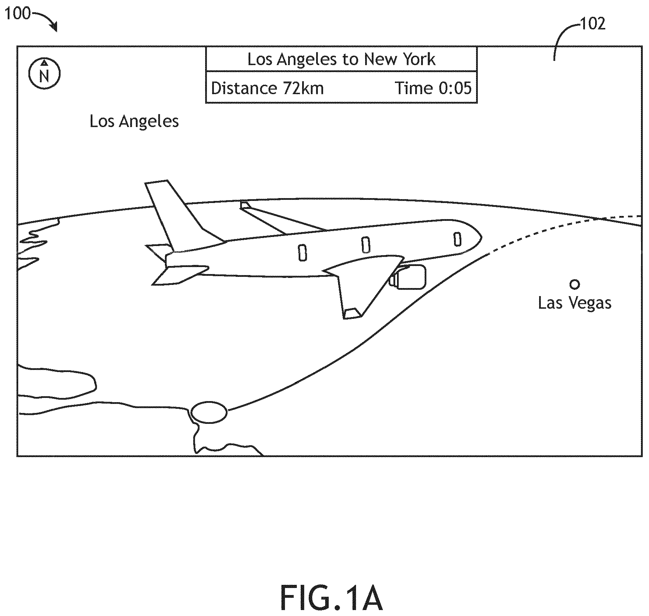

Referring to FIG. 1A, a graphical user interface (GUI) 100 is disclosed. In embodiments, the GUI 100 may be configured to display various graphics, graphical windows, camera feeds, photos, cabin feature controllable parameters (e.g., window shade and light controls and the like), and/or the like. Such graphics are configured to be at least one of automatically displayed or replaced according to embodiments herein.

For example, a graphical representation 102 of a flight may be displayed as shown in FIG. 1A. For instance, the graphical representation 102 may be referred to as an Airshow Flight Preview and provide a user with awareness of a time and/or distance of their flight.

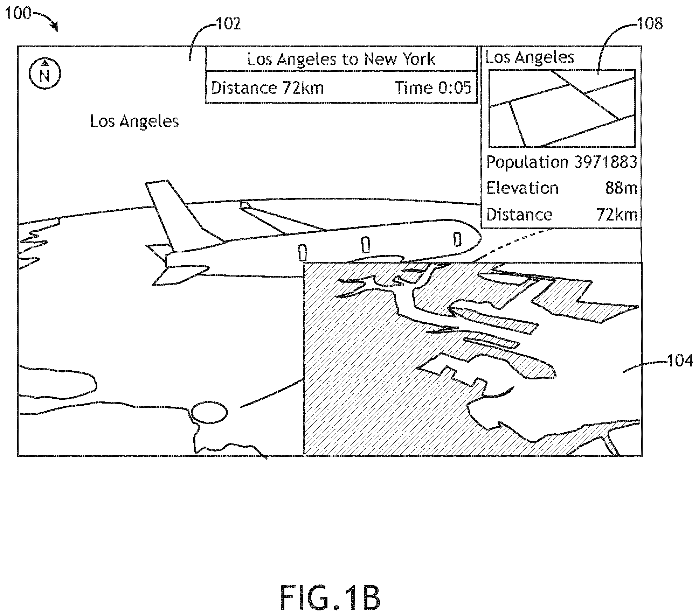

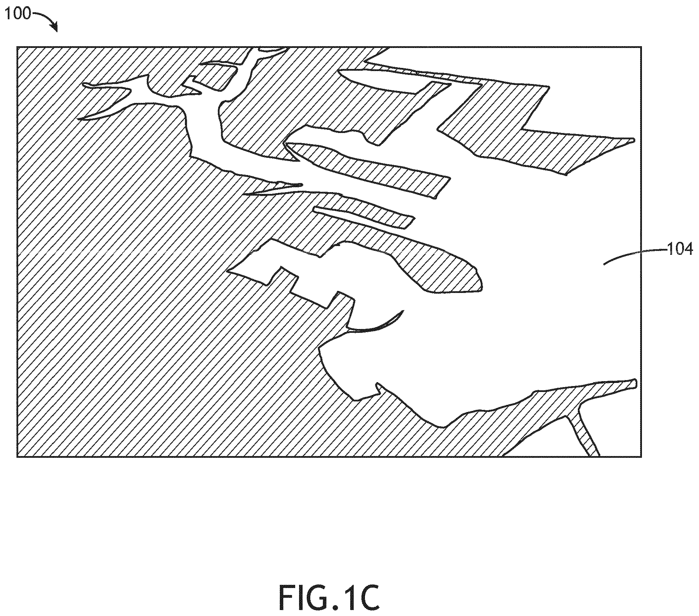

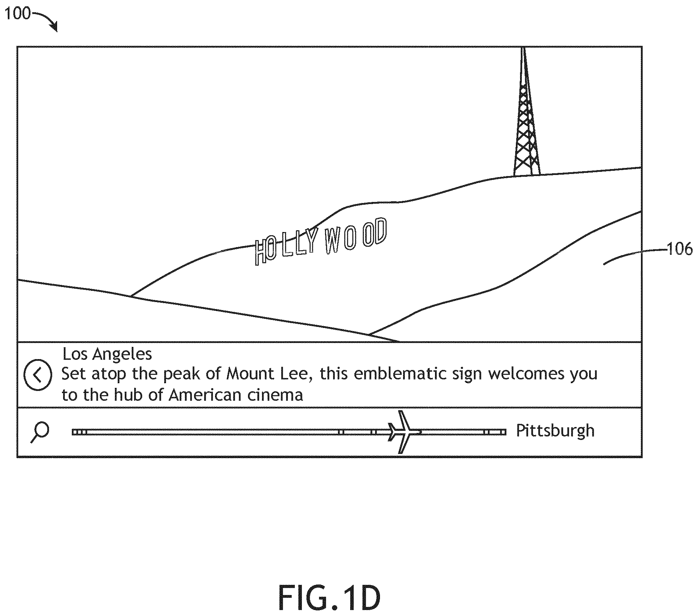

Although not shown in FIG. 1A, the GUI 100 may provide the user with controls for a variety of lighting or display elements throughout the cabin. The GUI 100 may display a control interface to control the deployment of shades over one or more cabin windows. For example, and shown in FIG. 1 of U.S. Patent Application No. 16/657,231, a control interface may be displayed by the GUI 100 when the user selects (e.g., by tapping or touching), for instance, cabin lighting related controls.

In embodiments, the GUI 100 may be displayed on any computing device including a touchscreen (i.e., a touch-sensitive display surface capable of accepting directed control input provided by a user by making contact with a particular location relative to the display surface, e.g., by tapping, pressing for an extended length of time, or directing a finger or stylus along the surface of the screen in a predetermined path) and in communication with networks or controller devices/systems aboard the aircraft. For example, the GUI 100 may be displayed on an interactive panel mounted to a wall, monument, or class divider within the aircraft cabin. Similarly, the GUI 100 may be displayed on a mobile computing device (e.g., a tablet). For example, users (e.g., passengers and crewmembers) may bring a compatible mobile computing device aboard the aircraft and "log in" to the GUI 100, enabling the users to view the GUI and control cabin functions through the touchscreen of the mobile device. In some embodiments, the tablet may connect wirelessly to aircraft-based networks (e.g., via Wi-Fi, Bluetooth, or any appropriate wireless communication protocols) allowing connectivity and remote control of cabin lighting, windows, in-flight entertainment (IFE) systems, and other cabin features. In some embodiments, the tablet may be physically connected to aircraft networks and cabin features via Ethernet connection (or any appropriate avionics networking connection). For example, the tablet may be mounted in a cradle configured to secure the device proximate to the user (e.g., proximate to a passenger seat occupied by the user) and providing an Ethernet interface via which the tablet may be physically connected to the networks.

In embodiments, the GUI 100 may include other graphics. For example, additional graphics may be graphic windows (e.g., pop up graphics and the like) and replace the previously displayed graphics and/or be displayed along with (e.g., superimposed over) the previously/currently displayed graphics. In this regard, the GUI 100 may display superimposed graphics over the graphics shown by FIG. 1A.

Referring to FIG. 1B, the GUI 100 of FIG. 1A is disclosed with additional superimposed graphics.

An example of superimposed graphics is shown by camera feed data 104 and flight data graphics 108. In embodiments, graphics may be displayed in a picture-in-picture arrangement such as is shown by the camera feed data 104 in FIG. 1B.

Referring to FIG. 1C, the GUI 100 of FIG. 1B is disclosed with replaced graphics. For example, the graphics of FIG. 1A may be automatically or manually replaced by other graphics (e.g., camera feed data 104). Automatic replacement may include, but is not limited to, changing the graphics of the GUI 100 based on flight data. Manual replacement may include, but is not limited to, a user-directed change of what is displayed based on user input (e.g., touch on a touchscreen). Such replacement may be a replacement of a full-screen graphic as shown, but may also be a replacement of a smaller graphic (e.g., pop up window).

An example of camera feed data is any camera feed of a location. For example, a location may be a point of interest (POI). For instance, the POI may be defined as any interesting external location such as landmarks, or the destination or near destination (e.g., airport to be landed at, city of the airport, city that is near the airport, the last 10 miles approaching the airport, or the like). For example, the camera feed data may be an externally-facing camera of the user's own aircraft pointed at or near the city of the airport to be landed at.

Referring to FIG. 1D, the GUI 100 of FIG. 1C is disclosed with an image graphic 106 to be automatically displayed. Typically, World Guide images are manually displayed by the user. For example, the image graphic 106 may be one or more images shown and stored on a memory of the computing device or received. For instance, the one or more images may be images of the POIs (e.g., stock photos, and the like). In embodiments, the image graphic 106 is configured to be automatically displayed in lieu of the camera feed data 104. For example, the image graphic 106 may be displayed when the camera feed data 104 is unavailable, undesirable unaesthetic weather (e.g., raining), unexpected camera settings (e.g., undesired zoom setting or camera angle not showing the POI well), and/or low visibility (e.g., dark outside, night time). In examples, the image graphic 106 may include POI Airshow World Guide (WG) images as shown in FIG. 1D.

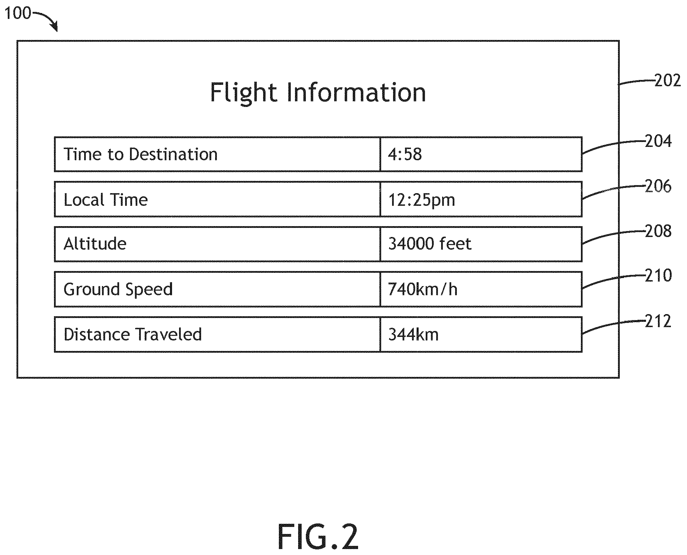

Referring to FIG. 2, the GUI 100 of FIG. 1D is disclosed with flight data graphic 202 to be automatically displayed or replaced. Typically, flight data graphic 202 must be manually displayed or replaced by a user.

In embodiments, flight data graphic 202 includes flight data such as time to destination 204, local time 206, altitude 208, ground speed 210, and distance traveled 212. The flight data may be received by the computing device. For example, the flight data may be received via an aircraft network.

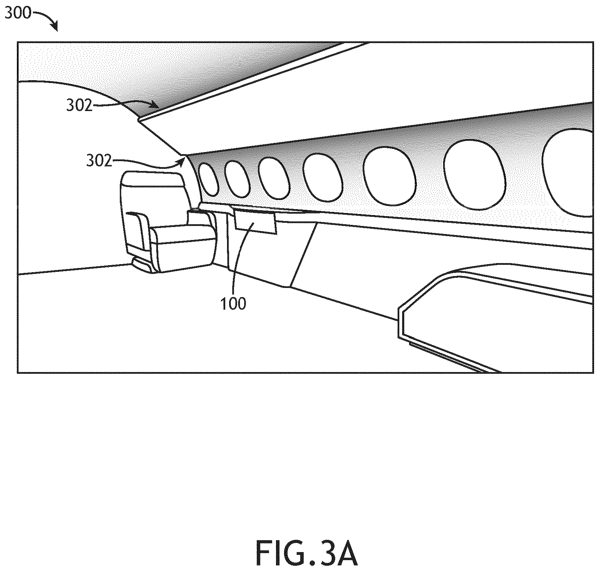

Referring to FIGS. 3A - 3D, an aircraft cabin 300 with various adjustments to cabin lighting levels are disclosed. The aircraft cabin 300 may include one or more lights 302. Note that a brighter intensity of the lights is shown as a darker shade for illustration purposes only.

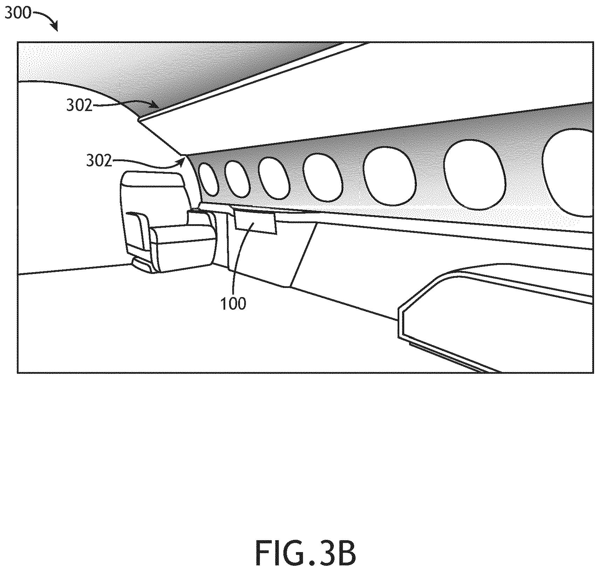

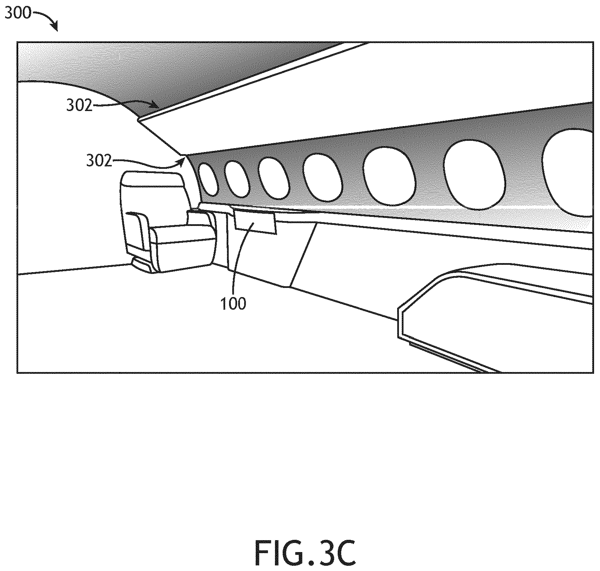

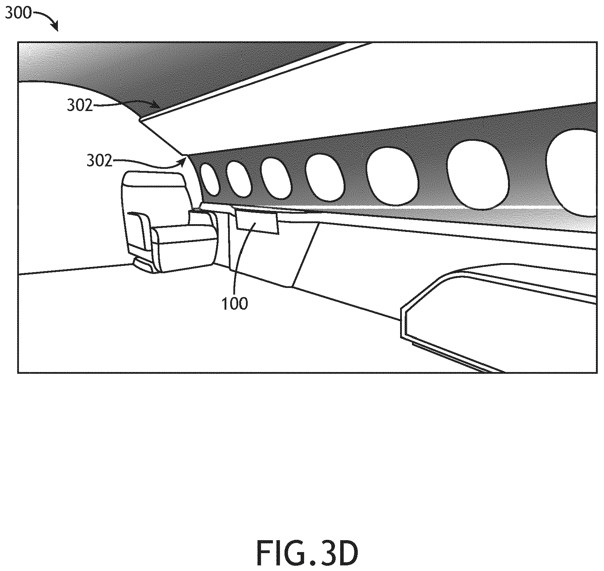

In embodiments, the cabin lighting level of the lights 302 may be automatically adjusted to any cabin lighting level indicative of a brightness. For example, the cabin lighting level in FIG. 3A is set to off (e.g., set to value 0), the cabin lighting level in FIG. 3B is set to low (e.g., set to value 25), the cabin lighting level in FIG. 3C is set to medium (e.g., set to value 50), and the cabin lighting level in FIG. 3D is set to maximum (e.g., set to value 100 out of 100).

Note that the label 100 in FIGS. 3A - 3D may, in some embodiments, be considered to be the computing device (e.g., a mobile touchscreen computing device).

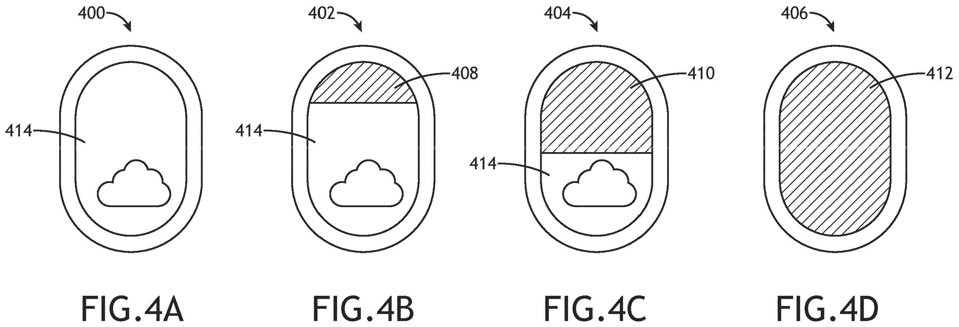

Referring to FIGS. 4A - 4D, windows 400, 402, 404, 406 with various adjustments to window levels (e.g., window shade levels) are disclosed. The aircraft cabin 300 may include one or more window shades 408, 410, 412 configured to selectively block a portion of external light 414 from an external environment outside the aircraft. In embodiments, window levels may be any adjustment of shade of the windows 400, 402, 404, 406 such as via mechanical raising or lowering of window shades or electrochromic tinting of windows 400, 402, 404, 406 configured to be tinted.

In embodiments, the window level of the windows 400, 402, 404, 406 may be automatically adjusted to any window level indicative of an amount of shade. For example, the cabin lighting level in FIG. 4A is set to no shade (e.g., set to value 0), the window level in FIG. 4B is set to low (e.g., set to value 25), the window level in FIG. 4C is set to medium (e.g., set to value 50), and the window level in FIG. 4D is set to maximum (e.g., set to value 100 out of 100). For instance, each value described herein may be a percentage (e.g., percentage of up to plus or minus a value of 12.5 from stated values) of the full range of possible values of each cabin feature.

Referring to FIGS. 1A - 4D, various embodiments are described.

In embodiments, the computing device is configured to receive the flight data and the camera feed data. For example, such data may be continuously sent to the computing device via an external controller such as the aircraft network.

In embodiments, the computing device determines whether to display the camera feed data 104 on the GUI 100 based on the flight data. For example, such a determination may be based on a proximity to a POI. For instance, the proximity may be time and/or distance based and may be based on the flight data. For example, the proximity may include, or be based on (e.g., derived from), a time to destination 204 and/or a distance traveled 212. In this regard, a camera feed of the POI may be automatically displayed to the user without them needing to keep watch or perform an action. For example, a user may wish to see a destination city or landmark as it is approached and by automatically displaying the POI, the user may be able to abstain from constantly keeping track of the current location relative to the POI for purposes of avoiding missing the view, thereby increasing enjoyment of the flight.

For example, in embodiments, the graphics displayed on the GUI 100 may change for each flight path and/or leg of a flight. For example, multiple times during a flight, the GUI 100 may display a different POI (e.g., displayed as a stock image or as a live camera feed data 104) as the POI is being flown over.

In embodiments, the computing device displays the camera feed data 104 on the GUI 100 based on the determination above. For example, if a certain proximity threshold is crossed or met, then the camera feed data 104 may be configured to be superimposed (e.g., picture-in-picture) on a graphic and/or replace a graphic. For instance, any time (e.g., less than 2 minutes to POI) or distance threshold (e.g., less than 5 kilometers from POI) may be used.

In embodiments, the computing device directs automatic adjustments of cabin features to be performed. For example, the computing device may transmit a signal of data (e.g., via wired and/or wireless protocol) indicative of an action to be performed, such as to actuate a window shade or dim a light. Further, such a direction may be based on a set of rules and/or threshold values associated with the flight data (e.g., local time). In this regard, cabin features may be automatically adjusted based on the flight data, increasing comfortability of passengers.

For example, below are various nonlimiting example sets of rules that may be used, each rule used alone and/or in combination with any other rules or flight data described or not described, in accordance with one or more embodiments herein. For purposes of these rules:

$$\text{Amount of Sunlight (AS)} = \text{local sunset time - local sunrise time};$$

$$\text{Day Light Division (DLD)} = \text{AS/3};$$

$$\text{Duration1} = \text{local sunset time to local sunrise time ST + DLD}$$

$$\text{Duration2} = \text{Duration1 to Duration2 + DLD}$$

$$\text{Duration3} = \text{Duration2 to Duration2 + DLD}$$

In embodiments, when altitude is at least 9,144 m (30,000 feet), local time is greater than Duration1, and local time is less than Duration2, then the directing may include adjusting the cabin lighting level to be at or around 50% (e.g., between 30 to 70%) and/or the window level to be at or around 25% (e.g., between 5 to 45%).

In embodiments, when altitude is at least 9,144 m (30,000 feet), local time is greater than Duration2, and local time is less than Duration3, then the directing may include adjusting the cabin lighting level to be at or around 25% and/or the window level to be at or around 50%.

In embodiments, when altitude is at least 9,144 m (30,000 feet), local time is greater than Duration3, and local time is less than local sunset time, then the directing may include adjusting the cabin lighting level to be at or around 50% (e.g., between 30 to 70%) and/or the window level to be at or around 25% (e.g., between 5 to 45%).

In embodiments, when altitude is at least 9,144 m (30,000 feet), local time is greater than local sunset time, and local time is less than local sunset time plus DLD, then the directing may include adjusting the cabin lighting level to be at or around 100% (e.g., between 80 to 100%) and/or the window level to be at or around 0% (e.g., less than 20%).

In embodiments, when altitude is at least 9,144 m (30,000 feet), local time is greater than local sunset time plus DLD, and local time is less than local sunrise time of the next day, then the directing may include adjusting the cabin lighting level to be at or around 25% and/or the window level to be at or around 100%.

In embodiments, the aircraft cabin may be a private jet aircraft cabin and/or a business class aircraft cabin.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

**Claims**

1. A cabin management control device, comprising:
   a computing device comprising a touchscreen, the computing device including at least one processor and in communication with at least one of an aircraft network and a cabin controller, the computing device configured to display via the touchscreen at least one graphical user interface GUI (100) configured to control cabin features corresponding to an aircraft cabin, wherein the cabin features include at least one of:

   a window level of one or more window shades; or
   a cabin lighting level of one or more lights; and
   wherein the computing device is configured to:

   receive flight data (108, 202);
   receive camera feed data (104);
   determine whether to display the camera feed data on the GUI based on the flight data;
   display the camera feed data on the GUI based on the determining; and
   **characterised in that** the flight data comprises local time (206) and **in that** the computer device is further configured to direct, based on the flight data, an automatic adjustment of the cabin lighting level of one or more lights,

   and/or to direct, based on the local time, an automatic adjustment of the window level of one or more window shades.

2. The cabin management control device of claim 1, wherein the camera feed data is a camera feed of a point of interest (POI) related to a flight path.

3. The cabin management control device of claim 2, wherein the determining whether to display the camera feed data is based on a proximity to the POI, wherein the proximity is based on the flight data.

4. The cabin management control device of claim 1, wherein the automatic adjustment of the window level is further based on a local sunrise time and a local sunset time.

5. The cabin management control device of claim 4, wherein the automatic adjustment of the window level includes lowering the window level based on the local time being greater than the local sunset time.

6. The cabin management control device of claim 1, wherein the automatic adjustment of the window level or the window level is further based on an altitude of the flight data, and optionally wherein the automatic adjustment of the window level is further based on the altitude being at least 9,144 m (30,000 feet).

7. The cabin management control device of claim 1, wherein the automatic adjustment of the cabin lighting level is based on the local time.

8. The cabin management control device of claim 7, wherein the automatic adjustment of the cabin lighting level is further based on a local sunrise time and a local sunset time, and optionally wherein the automatic adjustment of the cabin lighting level includes lowering the cabin lighting level based on the local time being greater than the local sunset time.

9. The cabin management control device of claim 7, wherein the automatic adjustment of the cabin lighting level or the cabin lighting level is further based on an altitude of the flight data, and optionally wherein the automatic adjustment of the cabin lighting level is further based on the altitude being at least 9,144 m (30,000 feet).

10. The cabin management control device of any preceding claim, wherein the computing device is configured to be mounted within the aircraft cabin.

11. The cabin management control device of any preceding claim, wherein the computing device is configured to be mounted proximate to a passenger seat.

12. The cabin management control device of any preceding claim, wherein the computing device includes a mobile computing device.

13. The cabin management control device of claim 11, wherein the mobile computing device is wirelessly coupled to the aircraft network and the cabin controller.

14. The cabin management control device of claim 11, wherein the mobile computing device is physically coupled to the aircraft network and the cabin controller.

15. The cabin management control device of any preceding claim, wherein:

the aircraft cabin includes a passenger cabin;
wherein a visible parameter of the GUI corresponds to at least one of the cabin lighting level, the window level, or a graphic capable of being displayed.

**Patentansprüche**

1. Kabinenmanagement-Steuervorrichtung, umfassend:
eine Computervorrichtung, die einen Touchscreen umfasst, wobei die Computervorrichtung wenigstens einen Prozessor einschließt und mit wenigstens einem von einem Luftfahrzeugnetzwerk und einer Kabinensteuerung in Kommunikation steht, wobei die Computervorrichtung konfiguriert ist, um über den Touchscreen wenigstens eine grafische Benutzeroberfläche GUI (100) anzuzeigen, die konfiguriert ist, um Kabinenmerkmale entsprechend einer Luftfahrzeugkabine zu steuern, wobei die Kabinenmerkmale wenigstens eines einschließen von:

einem Fenster-Niveau von einer oder mehreren Fensterblenden; oder
einem Kabinenbeleuchtungs-Niveau von einer oder mehreren Leuchten; und
wobei die Computervorrichtung konfiguriert ist zum:

Empfangen von Flugdaten (108, 202);
Empfangen von Kamera-Feed-Daten (104);
Bestimmen, ob die Kamera-Feed-Daten auf der GUI angezeigt werden sollen, basierend auf den Flugdaten;

Anzeigen der Kamera-Feed-Daten auf der GUI basierend auf dem Bestimmen; und

**dadurch gekennzeichnet, dass** die Flugdaten Ortszeit (206) umfassen und dass die Computervorrichtung ferner konfiguriert ist, um basierend auf den Flugdaten eine automatische Anpassung des Kabinenbeleuchtungs-Niveaus von einer oder mehreren Leuchten anzuweisen, und/oder um basierend auf der Ortszeit eine automatische Anpassung des Fenster-Niveaus von einer oder mehreren Fensterblenden anzuweisen.

2. Kabinenmanagement-Steuervorrichtung nach Anspruch 1, wobei die Kamera-Feed-Daten ein Kamera-Feed eines Point of Interest (POI) sind, der sich auf eine Flugbahn bezieht.

3. Kabinenmanagement-Steuervorrichtung nach Anspruch 2, wobei das Bestimmen, ob die Kamera-Feed-Daten angezeigt werden sollen, auf einer Nähe zum POI basiert, wobei die Nähe auf den Flugdaten basiert.

4. Kabinenmanagement-Steuervorrichtung nach Anspruch 1, wobei die automatische Anpassung des Fenster-Niveaus ferner auf einer lokalen Sonnenaufgangszeit und einer lokalen Sonnenuntergangszeit basiert.

5. Kabinenmanagement-Steuervorrichtung nach Anspruch 4, wobei die automatische Anpassung des Fenster-Niveaus das Absenken des Fenster-Niveaus basierend darauf einschließt, dass die Ortszeit später als die lokale Sonnenuntergangszeit ist.

6. Kabinenmanagement-Steuervorrichtung nach Anspruch 1, wobei die automatische Anpassung des Fenster-Niveaus oder das Fenster-Niveau ferner auf einer Flughöhe aus den Flugdaten basiert, und optional wobei die automatische Anpassung des Fenster-Niveaus ferner darauf basiert, dass die Flughöhe wenigstens 9.144 m (30.000 Fuß) beträgt.

7. Kabinenmanagement-Steuervorrichtung nach Anspruch 1, wobei die automatische Anpassung des Kabinenbeleuchtungs-Niveaus auf der Ortszeit basiert.

8. Kabinenmanagement-Steuervorrichtung nach Anspruch 7, wobei die automatische Anpassung des Kabinenbeleuchtungs-Niveaus ferner auf einer lokalen Sonnenaufgangszeit und einer lokalen Sonnenuntergangszeit basiert, und optional wobei die automatische Anpassung des Kabinenbeleuchtungs-Niveaus das Absenken des Kabinenbeleuchtungs-Niveaus basierend darauf einschließt, dass die Ortszeit später als die lokale Sonnenuntergangszeit ist.

9. Kabinenmanagement-Steuervorrichtung nach Anspruch 7, wobei die automatische Anpassung des Kabinenbeleuchtungs-Niveaus oder das Kabinenbeleuchtungs-Niveau ferner auf einer Flughöhe aus den Flugdaten basiert, und optional wobei die automatische Anpassung des Kabinenbeleuchtungs-Niveaus ferner darauf basiert, dass die Flughöhe wenigstens 9.144 m (30.000 Fuß) beträgt.

10. Kabinenmanagement-Steuervorrichtung nach einem der vorhergehenden Ansprüche, wobei die Computervorrichtung konfiguriert ist, um innerhalb der Luftfahrzeugkabine montiert zu werden.

11. Kabinenmanagement-Steuervorrichtung nach einem der vorhergehenden Ansprüche, wobei die Computervorrichtung konfiguriert ist, um in der Nähe eines Passagiersitzes montiert zu werden.

12. Kabinenmanagement-Steuervorrichtung nach einem der vorhergehenden Ansprüche, wobei die Computervorrichtung eine mobile Computervorrichtung einschließt.

13. Kabinenmanagement-Steuervorrichtung nach Anspruch 11, wobei die mobile Computervorrichtung drahtlos mit dem Luftfahrzeugnetzwerk und der Kabinensteuerung gekoppelt ist.

14. Kabinenmanagement-Steuervorrichtung nach Anspruch 11, wobei die mobile Computervorrichtung physisch mit dem Luftfahrzeugnetzwerk und der Kabinensteuerung gekoppelt ist.

15. Kabinenmanagement-Steuervorrichtung nach einem der vorhergehenden Ansprüche, wobei:

die Luftfahrzeugkabine eine Passagierkabine einschließt;
wobei ein sichtbarer Parameter der GUI wenigstens einem von dem Kabinenbeleuchtungs-Niveau, dem Fenster-Niveau oder einer Grafik entspricht, die angezeigt werden kann.

**Revendications**

1. Dispositif de commande de gestion de cabine, comprenant :
un dispositif informatique comprenant un écran tactile, le dispositif informatique comportant au moins un processeur et étant en communication avec au moins l'un d'un réseau de bord d'aéronef et d'un contrôleur de cabine, le dispositif informatique étant configuré pour afficher, via l'écran tactile, au moins une interface graphique utilisateur GUI (100) configurée pour commander des fonctions de cabine correspondant à une cabine d'aéronef, dans lequel les caractéristiques de cabine comprennent au moins l'un des éléments suivants :

un niveau d'ouverture d'un ou de plusieurs stores de hublot ; ou
un niveau d'éclairage d'un ou de plusieurs dispositifs d'éclairage de cabine ; et
dans lequel le dispositif informatique est configuré pour :

recevoir les données de vol (108, 202) ;
recevoir les données de flux de caméra (104) ;
déterminer s'il convient d'afficher les données de flux de caméra sur la GUI en fonction des données de vol ;
afficher les données de flux de caméra sur la GUI en fonction de la détermination ; et
**caractérisé en ce que** les données de vol comprennent une heure locale (206) et **en ce que** le dispositif informatique est en outre configuré pour commander, en fonction des données de vol, un réglage automatique du niveau d'éclairage d'un ou de plusieurs dispositifs d'éclairage de cabine, et/ou pour commander, en fonction de l'heure locale, un réglage automatique du niveau d'ouverture d'un ou de plusieurs stores de hublot.

2. Dispositif de commande de gestion de cabine selon la revendication 1, dans lequel les données de flux de caméra constituent un flux vidéo d'un point d'intérêt (POI) lié à une trajectoire de vol.

3. Dispositif de commande de gestion de cabine selon la revendication 2, dans lequel la détermination d'afficher les données de flux de caméra est effectuée en fonction d'une proximité du POI, dans lequel la proximité étant en fonction des données de vol.

4. Dispositif de commande de gestion de cabine selon la revendication 1, dans lequel le réglage automatique du niveau d'ouverture du store de hublot est en outre effectué en fonction d'une heure locale de lever du soleil et d'une heure locale de coucher du soleil.

5. Dispositif de commande de gestion de cabine selon la revendication 4, dans lequel le réglage automatique du niveau d'ouverture du store de hublot comprend l'abaissement du store lorsque l'heure locale est supérieure à l'heure locale de coucher du soleil.

6. Dispositif de commande de gestion de cabine selon la revendication 1, dans lequel le réglage automatique du niveau d'ouverture du store de hublot ou le niveau d'ouverture du store de hublot est en outre effectué en fonction d'une altitude issue des données de vol, et éventuellement dans lequel le réglage automatique du niveau d'ouverture du store de hublot est en outre effectué en fonction du fait que l'altitude est d'au moins 9 144 m (30 000 pieds).

7. Dispositif de commande de gestion de cabine selon la revendication 1, dans lequel le réglage automatique du niveau d'éclairage de cabine est effectué en fonction de l'heure locale.

8. Dispositif de commande de gestion de cabine selon la revendication 7, dans lequel le réglage automatique du niveau d'éclairage de cabine est en outre effectué en fonction d'une heure locale de lever du soleil et d'une heure locale de coucher du soleil, et éventuellement dans lequel le réglage automatique du niveau d'éclairage de cabine comprend la réduction du niveau d'éclairage lorsque l'heure locale est supérieure à l'heure locale de coucher du soleil.

9. Dispositif de commande de gestion de cabine selon la revendication 7, dans lequel le réglage automatique du niveau d'éclairage de cabine ou le niveau d'éclairage de cabine est en outre effectué en fonction d'une altitude issue des données de vol, et éventuellement dans lequel le réglage automatique du niveau d'éclairage de cabine est en outre effectué en fonction du fait que l'altitude est d'au moins 9 144 m (30 000 pieds).

10. Dispositif de commande de gestion de cabine selon l'une quelconque des revendications précédentes, dans lequel le dispositif informatique est configuré pour être monté à l'intérieur de la cabine d'aéronef.

11. Dispositif de commande de gestion de cabine selon l'une quelconque des revendications précédentes, dans lequel le dispositif informatique est configuré pour être monté à proximité d'un siège passager.

12. Dispositif de commande de gestion de cabine selon l'une quelconque des revendications précédentes, dans lequel le dispositif informatique comprend un dispositif informatique mobile.

13. Dispositif de commande de gestion de cabine selon la revendication 11, dans lequel le dispositif informatique mobile est couplé sans fil au réseau de bord d'aéronef et au contrôleur de cabine.

14. Dispositif de commande de gestion de cabine selon la revendication 11, dans lequel le dispositif informatique mobile est couplé physiquement au réseau de bord d'aéronef et au contrôleur de cabine.

15. Dispositif de commande de gestion de cabine selon l'une quelconque des revendications précédentes, dans lequel :

la cabine d'aéronef comprend une cabine passagers ;
dans lequel un paramètre visible de la GUI correspond à au moins l'un du niveau d'éclairage de cabine, du niveau d'ouverture du store de hublot ou d'un graphique susceptible d'être affiché.

FIG.1A

FIG.1B

FIG.1C

EP 4 375 187 B1

FIG.1D

100

## Flight Information

| | | |
|---|---|---|
| Time to Destination | 4:58 | 204 |
| Local Time | 12:25pm | 206 |
| Altitude | 34000 feet | 208 |
| Ground Speed | 740km/h | 210 |
| Distance Traveled | 344km | 212 |

202

FIG.2

FIG.3A

FIG.3B

FIG.3C

FIG.3D

FIG.4A

FIG.4B

FIG.4C

FIG.4D

**EP 4 375 187 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202211067639
- US 11182970 B1
- EP 3470327 A1
- US 2021122469 A1
- US 2016004374 A1
- US 65723119
- US 657231